# DEMANDE DE BREVET EUROPEEN

(11) **EP 4 389 491 A2**
(43) Date de publication de la demande: **26.06.2024**
(21) Numéro de dépôt: 23219316.9
(22) Date de dépôt: 21.12.2023
(51) Int. Cl.: B60K 35/00, B60K 35/10

(54) **SYSTÈME DE RÉTRO-ÉCLAIRAGE D'UN PICTOGRAMME LUMINEUX À HOMOGÉNÉITÉ D'ÉCLAIRAGE AMÉLIORÉE**

(30) Priorité: 23.12.2022 FR 2214360
(71) Demandeur: Commissariat à l'énergie atomique et aux énergies alternatives, 75015 Paris (FR); Symbiose, 33710 Pugnac (FR)
(72) Inventeur: DUCROS, Cédric, 38054 Grenoble cedex 09 (FR); PAWLAK, Sébastien, 38054 Grenoble cedex 09 (FR); TOMASSINI, Mathieu, 38054 Grenoble cedex 09 (FR)
(74) Mandataire: Hautier IP

(57) **Abrégé**

L'invention concerne un système de rétroéclairage (1) d'un pictogramme lumineux comprenant un film technique (100) comprenant une feuille technique (110) et une première source lumineuse (150) configurée pour émettre un premier faisceau lumineux dans une gamme d'émission, un film décor (200) comprenant une couche obturatrice (230) présentant au moins une première ouverture (235) formant un premier pictogramme (1000), et une couche de remplissage (300) s'étendant entre le film technique et le film décor. Le film technique et le film décor (200) comprennent en outre respectivement une première couche réfléchissante (140) et une deuxième couche réfléchissante (240) recouvrant la couche obturatrice sans recouvrir la première ouverture. Une partie au moins du premier faisceau lumineux est configurée pour être réfléchie par la première couche réfléchissante et par la deuxième couche réfléchissante avant de passer par l'au moins une première ouverture.

## Description

### DOMAINE TECHNIQUE

La présente invention concerne le domaine de la plastronique. Ce domaine technologique se propose d'intégrer des circuits imprimés dans une forme particulière, comme par exemple une coque de téléphone mobile ou le tableau de bord d'une voiture. L'invention concerne tout particulièrement les dalles plastroniques comprenant des pictogrammes rétroéclairés.

### ETAT DE LA TECHNIQUE

Les dalles plastroniques rétroéclairées sont de plus en plus présentes dans diverses industries, notamment l'industrie automobile.

Les dalles plastroniques rétroéclairées sont typiquement constituées :
- d'un film technique avec des pistes électroniques, des composants électroniques, des composants optiques ainsi que des encres de gestion optique. Les encres de gestion optique sont déposées afin de gérer des réflexions ou absorption des rayons lumineux générés par les composants optiques.
- d'un film décor ou film d'aspect, placé en surface de la dalle afin d'assurer l'esthétique de la dalle et de lui conférer une fonction optique pour la gestion des commandes du tableau de bord, notamment par l'intermédiaire de pictogrammes rétroéclairés.
- d'un matériau polymère injecté entre les films technique et décor afin de constituer l'objet, de transmettre les rayons lumineux préférentiellement des composants optiques du film technique vers les pictogrammes imprimés sur les films décor.

L'efficacité optique de rétroéclairage au sein d'une dalle plastronique peut être caractérisée par plusieurs grandeurs optiques, notamment :
- la luminance d'un pictogramme (en cd/m²) pour une puissance électrique (W) délivrée par les composants optiques. Cette caractéristique est couramment désignée « rendement optique ».
- la pollution lumineuse induite par un pictogramme sur ses premiers voisins. Cette caractéristique est également parfois nommée « pollution croisée ».
- l'homogénéité d'éclairage sur un pictogramme.

Les constructeurs, par exemple les constructeurs automobiles, établissent le plus souvent des cahiers des charges fixant des seuils à atteindre pour ces caractéristiques et devant donc être atteints par les fabricants.

Cependant, la plupart des solutions actuelles ne sont pas optimales et notamment ne présentent pas un niveau d'homogénéité d'éclairage satisfaisant. Par exemple, de nombreuses solutions de rétro-éclairage provoquent des pics d'intensité lumineuse, dits points chauds, en certain points du pictogramme, contrastant fortement avec le reste du pictogramme présentant une luminance plus faible. Les documents DE 10 2019 107358 A1, DE 10 2015 201975 A1 et FR 3 109 915 A1 divulguent divers systèmes d'éclairages de pictogrammes n'étant pas optimaux.

Un objectif de la présente invention est donc de proposer un système de rétroéclairage d'un pictogramme lumineux présentant de meilleures performances que les systèmes existants, et notamment une meilleure homogénéité d'éclairage du ou des pictogrammes qu'il comporte.

### RESUME

Pour atteindre cet objectif, selon un mode de réalisation on prévoit un système de rétroéclairage d'un pictogramme lumineux comprenant :
- un film dit film technique présentant une face interne et comprenant au moins une première source lumineuse, la première source lumineuse étant configurée pour émettre un premier faisceau lumineux dans une gamme de longueurs d'onde dite gamme d'émission,
- un film dit film décor présentant une face interne en regard de la face interne du film technique, le film décor comprenant une couche obturatrice présentant au moins une première ouverture, la couche obturatrice présentant une absorbance supérieure ou égale à 95% dans la gamme d'émission, la forme de l'au moins une première ouverture dans la couche obturatrice constituant un premier pictogramme, le premier pictogramme s'étendant principalement parallèlement à un plan dit plan transversal,
- une couche de remplissage à base d'un matériau de remplissage et s'étendant entre la face interne du film technique et la face interne du film décor.

Le film technique comprend en outre une première couche réfléchissante et le film décor comprend en outre une deuxième couche réfléchissante. La deuxième couche réfléchissante recouvre au moins une partie d'une surface interne de la couche obturatrice sans recouvrir l'au moins une première ouverture. La première couche réfléchissante et la deuxième couche réfléchissante présentent chacune un facteur de réflexion supérieur ou égal à 70%, de préférence supérieure ou égale à 80%, dans la gamme d'émission. Une partie au moins du premier faisceau lumineux est configurée pour être réfléchie au moins une fois par la première couche réfléchissante et au moins une fois par le deuxième film réfléchissant avant de passer par l'au moins une première ouverture. La présence de la première couche réfléchissante et de la deuxième couche réfléchissante en vis-à-vis l'une de l'autre permet qu'une partie au moins du faisceau lumineux émis réalise au moins un aller-retour dans l'épaisseur de la couche de remplissage avant de sortir du système au travers des ouvertures. Les rayons lumineux, dits indirects, effectuant un tel aller-retour s'ajoutent aux rayons indirects subissant une unique réflexion et aux rayons directs, sortant directement par les ouvertures, sans réflexion préalable. Les rayons indirects permettent de rétro-éclairer le pictogramme selon un profil de luminance plus avantageux que si seuls des rayons directs participaient à la luminance du pictogramme, comme c'est le cas dans les systèmes existants. Les rayons indirects permettent ainsi une redistribution de la luminance au sein du pictogramme. L'homogénéité d'éclairage du pictogramme s'en trouve améliorée.

Le rendement optique global du pictogramme est lui aussi amélioré grâce à la présence de la première couche réfléchissante et de la deuxième couche réfléchissante, puisqu'une plus grande proportion du faisceau lumineux émis par la première source lumineuse participe au rétro-éclairage du pictogramme.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1A représente une vue en coupe d'un système de rétro-éclairage d'un pictogramme lumineux selon l'invention, figurant notamment le film technique, la couche de remplissage et le film décor.
La figure 1B représente film décor d'un système de rétro-éclairage d'un pictogramme lumineux selon l'invention, vu de dessous, c'est-à-dire vu depuis l'intérieur du système.
La figure 2A représente une vue en coupe d'un système de rétro-éclairage d'un pictogramme lumineux selon l'invention présentant deux coudes entre lesquels se trouve le pictogramme.
La figure 2B représente une vue en coupe d'un système de rétro-éclairage d'un pictogramme lumineux selon l'invention présentant deux coudes entre lesquels se trouve le pictogramme, une des sources lumineuses rétro-éclairant le pictogramme se trouvant au niveau de l'un des coudes.
La figure 3 représente une vue en coupe d'un système de rétro-éclairage de deux pictogrammes lumineux selon l'invention, les deux pictogrammes lumineux étant séparés par deux coudes formés par le système.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les dimensions ne sont pas représentatives de la réalité.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement :
Selon un mode de réalisation préféré, la première source lumineuse présente une direction moyenne d'émission sensiblement parallèle au plan transversal, et dans le plan transversal, la première source lumineuse et l'au moins une première ouverture sont espacées d'une distance dite distance de rétro-éclairage comprise entre 0 et 5 mm. De cette façon, l'éclairage direct du pictogramme (c'est-à-dire l'éclairage du pictogramme par les rayons ne subissant pas de réflexion sur l'une des couches réfléchissantes) est minimisé.
Selon un mode de réalisation préféré, le rapport entre le flux lumineux sortant du système par l'au moins une première ouverture après avoir été réfléchi au moins une fois par au moins l'un parmi la première couche réfléchissante et la deuxième couche réfléchissante, et le flux lumineux total sortant du système par l'au moins une première ouverture est supérieur ou égal à 75%.
Selon un mode de réalisation préféré, la première couche réfléchissante et la première source lumineuse sont espacées dans le plan transversal d'une distance inférieure à 1 mm, de préférence sensiblement égale à 0 mm. Cela permet de s'assurer qu'une proportion très importante, voire la totalité, du faisceau émis par la première source lumineuse, est réfléchie par la première couche réfléchissante.
Selon un mode de réalisation avantageux, selon toute direction du plan transversal, l'une parmi la première couche réfléchissante et la deuxième couche réfléchissante s'étend au-delà de l'autre parmi la première couche réfléchissante et la deuxième couche réfléchissante sur une distance dite dépassement latéral compris entre 0 et 5 mm
Selon un exemple préféré, le dépassement latéral est sensiblement égal à 0.
Selon un mode de réalisation, selon toute direction du plan transversal, la deuxième couche réfléchissante s'étend au-delà du premier pictogramme sur une distance dite débordement latéral supérieure à 1 mm.
Selon un mode de réalisation, selon toute direction du plan transversal, la deuxième couche réfléchissante s'étend au-delà du premier pictogramme sur une distance dite débordement latéral inférieure à 5 mm.
Selon un exemple avantageux, la couche de remplissage présente une transmittance totale supérieure à 50% dans la gamme d'émission.
Selon un exemple avantageux, la couche de remplissage présente une absorption comprise entre 10 et 20% dans la gamme d'émission.
Selon un exemple avantageux, la couche de remplissage présente un coefficient de diffusion supérieure à 50% dans la gamme d'émission.
Selon un mode de réalisation, le film décor comprend une couche semi-transparente au moins sous-jacente à l'au moins une première ouverture. La couche semi-transparente est typiquement à base d'une encre fumée. Les propriétés de l'encre fumée et l'épaisseur e₂₂₀ de la couche semi-transparente 220 sont telles que ce dernier présente une transmittance totale comprise entre 10% et 50%, de préférence sensiblement égale à 40% dans la gamme d'émission. La présence de la couche semi-transparente permet d'empêcher que le pictogramme soit visible par l'utilisateur lorsqu'il n'est pas éclairé.
Selon un exemple avantageux, la couche de remplissage présente une épaisseur e₃₀₀ selon une direction dite direction verticale perpendiculaire au plan transversal supérieure à 1 mm. Selon un exemple avantageux, e₃₀₀ est inférieure à 5 mm. Il est à noter qu'en fonction des éléments composant les films techniques et décor, l'épaisseur e₃₀₀ de la couche de remplissage, mesurée entre les faces internes de ces films, peut varier d'un endroit à un autre du système. Cependant, cette variation est très faible par rapport à e₃₀₀ et pourra donc être négligée.
Selon un mode de réalisation avantageux, la couche de remplissage présente une première portion remplissant l'au moins une première ouverture et une deuxième portion, la première portion et la deuxième portion formant un coude d'angle α, avec α supérieur à 120 °. Selon un exemple, l'au moins une première source lumineuse est sous-jacente à la deuxième portion de la couche de remplissage. Cela permet de placer la première source lumineuse avec un décalage angulaire par rapport au plan transversal dans lequel s'étend le pictogramme. Cela permet de jouer sur l'homogénéité d'éclairage du pictogramme et peut notamment permettre de limiter l'intensité lumineuse des points chauds voire de supprimer les points chauds.
Selon un exemple, dans lequel le matériau de remplissage est choisi parmi un polycarbonate un polyéthylène téréphtalate (PET) et un polyméthacrylate de méthyle (PMMA).
Selon un mode de réalisation avantageux :
   - la couche obturatrice présente au moins une deuxième ouverture, la forme de l'au moins une deuxième ouverture dans la couche obturatrice constituant un deuxième pictogramme,
   - le film technique comprend au moins une deuxième source lumineuse, la deuxième source lumineuse étant configurée pour émettre un deuxième faisceau lumineux dans une gamme de longueurs d'onde dite deuxième gamme d'émission,

   - le film technique comprend en outre une première couche réfléchissante secondaire et le film décor comprend en outre une deuxième couche réfléchissante secondaire,
   - la deuxième couche réfléchissante secondaire recouvre au moins une partie de la surface interne de la couche obturatrice sans recouvrir l'au moins une deuxième ouverture,
   - une partie au moins du deuxième faisceau lumineux est configurée pour être réfléchie au moins une fois par la première couche réfléchissante secondaire et au moins une fois par la deuxième couche réfléchissante secondaire avant de passer par l'au moins une deuxième ouverture.
Selon un exemple préféré, selon toute direction du plan transversal, l'au moins une première ouverture et l'au moins une deuxième ouverture sont espacées d'une distance dite écartement inter-pictogrammes Dᵢₙₜₑᵣ supérieure à 20 mm. Cela permet de limiter la pollution lumineuse entre le premier pictogramme et le deuxième pictogramme.
Selon un mode de réalisation avantageux, l'au moins une deuxième ouverture est remplie par une troisième portion de la couche de remplissage séparée de la première portion de la couche de remplissage au moins par la deuxième portion de la couche de remplissage. Ainsi, les zones du système dans lesquelles se trouvent respectivement le premier pictogramme et le deuxième pictogramme sont séparées par un coude formé par le système. Cela permet de limiter la pollution lumineuse entre le premier pictogramme et le deuxième pictogramme.

Dans la présente demande de brevet, les termes « diode électroluminescente », « LED » ou simplement « diode » sont employés en synonymes.

Le facteur de réflexion d'un matériau à une longueur d'onde donnée ou à une gamme de longueurs d'onde donnée est la proportion de lumière réfléchie par la surface de ce matériau, définie comme le rapport entre le flux lumineux réfléchi et le flux lumineux incident. Il s'exprime typiquement en pourcentage.

La transmittance totale, ou coefficient de transmission, d'un matériau, est le rapport entre l'intensité du rayonnement transmis à l'intensité incidente. Elle s'exprime typiquement en pourcentage, 0% correspondant à un matériau totalement opaque et 100% à un matériau parfaitement transparent. La transmittance totale comprend deux composantes : la transmittance spéculaire et la transmittance diffuse.

Le coefficient de diffusion, ou proportion de transmittance diffuse, couramment désigné par le terme anglais de « haze » correspond au rapport de la transmittance diffuse et de la transmittance totale, le plus souvent donné en pourcentage.

Les termes « sensiblement », « environ », « de l'ordre de » signifient, lorsqu'ils se rapportent à une valeur, « à 10% près » de cette valeur ou, lorsqu'ils se rapportent à une orientation angulaire, « à 10° près » de cette orientation. Ainsi, une direction sensiblement normale à un plan signifie une direction présentant un angle de 90±10° par rapport au plan.

La spectrophotométrie est bien adaptée pour caractériser optiquement les matériaux dont il est question dans la présente invention.

On utilisera dans la description détaillée qui suit un repère dont la direction longitudinale correspond à l'axe Y, la direction transversale correspond à l'axe X et la direction verticale correspond à l'axe Z.

Le plan transversal dont il est fait mention correspond sur les figures au plan défini par les axes X et Y Le plan formé par les axes X et Z est lui nommé plan de coupe.

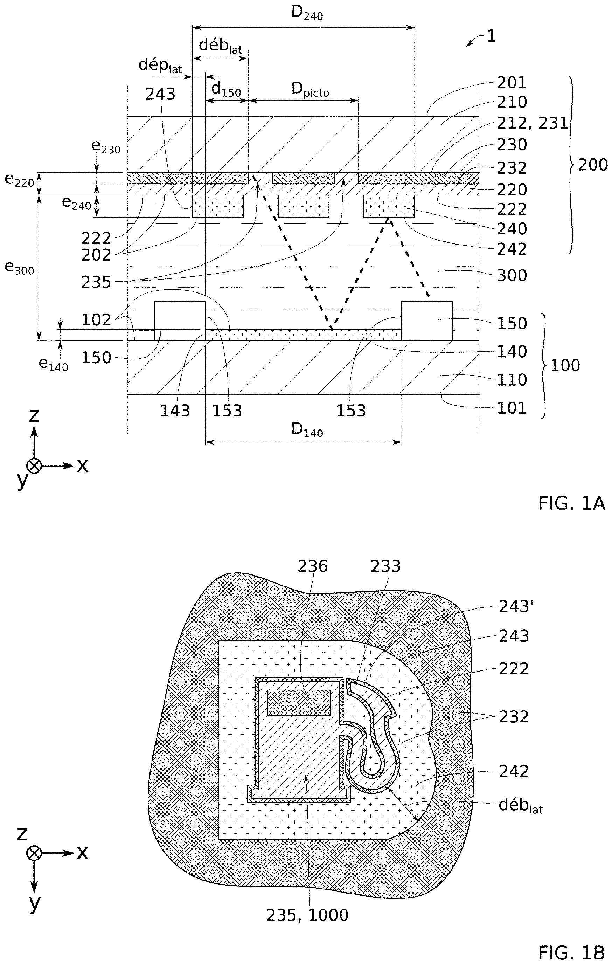

Un système de rétroéclairage d'un pictogramme lumineux va maintenant être décrit en référence aux figures 1A et 1B.

Le système de rétroéclairage comprend notamment trois éléments principaux : un film technique 100, un film décor 200, et une couche de remplissage 300 s'étendant entre le film technique 100 et le film décor 200.

La couche de remplissage 300 est à base d'un matériau dit de remplissage, avantageusement un polymère de préférence transparent dans la lumière visible, à usage optique, et pouvant par exemple être un polycarbonate, un PET (polyéthylène téréphtalate) ou encore un PMMA (polyméthacrylate de méthyle).

Le film technique 100 comprend typiquement une feuille technique 110 à base d'un matériau thermoformable, par exemple un polycarbonate.

Le film technique 100 comprend par ailleurs au moins une première source lumineuse 150, typiquement une LED 150 (de l'anglais « Light-Emitting Diode », se traduisant en français par diode électroluminescente) permettant le rétro-éclairage d'un premier pictogramme qui sera décrit plus avant. Le rétro-éclairage du premier pictogramme peut être assuré par une unique première source lumineuse 150 ou plusieurs premières sources lumineuses 150, avantageusement entre 1 et 4 premières sources lumineuses 150. Les caractéristiques décrites ci-dessous pour une première source lumineuse 150 s'appliquent mutatis mutandis à d'éventuelles autres premières sources lumineuses 150 rétro-éclairant le même premier pictogramme. Chaque source 150 peut comporter plusieurs sources élémentaires, notamment de couleurs différentes pour faire varier l'illumination du pictogramme, comme cela est présenté plus loin.

La première source lumineuse 150 est configurée pour émettre un premier faisceau lumineux dans une gamme de longueurs d'onde dite gamme d'émission. La ou les longueurs d'onde émises par la première source lumineuse 150 sont typiquement choisies en fonction des applications visées ainsi que d'éventuelles normes. La longueur d'onde ou la gamme de longueurs d'onde est avantageusement comprise dans le domaine du visible par l'œil humain.

Le faisceau lumineux émis par la première source lumineuse 150 peut présenter différents profils. De manière avantageuse, le faisceau lumineux est configuré pour présenter une direction moyenne d'émission parallèle à une face supérieure 112 de la feuille technique 110. Avantageusement, le flux lumineux est configuré pour être principalement émis selon cette direction moyenne. Le faisceau lumineux comprend cependant une multitude de rayons se propageant selon autant de directions d'émission. Les rayons du faisceau lumineux sont typiquement émis selon un profil lambertien ou orthotrope, c'est-à-dire que la luminance de la première source lumineuse 150 est uniforme angulairement, mais que l'intensité lumineuse émise dépend de la direction d'émission. L'intensité lumineuse du faisceau peut par exemple varier selon la loi de Lambert (l=l₀*cos(θ) avec l l'intensité lumineuse selon une direction d'émission, l₀ l'intensité lumineuse à la source et θ l'angle de la direction d'émission par rapport à la normale à la surface source). Il est entendu cependant que tout autre profil d'émission est envisageable et que la première source lumineuse 150 n'est pas limitée à une source lambertienne.

Dans le cas typique où la première source lumineuse 150 est une LED, cette dernière comprend une région active depuis laquelle est émis un rayonnement lumineux. Dans le cas présent la région active s'étend typiquement depuis un flanc interne 153 de la première source lumineuse 150. Ce flanc interne 153 s'étend avantageusement dans un plan normal au plan transversal. Le faisceau émis par la région active présente alors typiquement une direction moyenne d'émission normale au flanc 153 et donc parallèle au plan transversal. Le film technique 100 comprend par ailleurs une première couche réfléchissante 140. La première couche réfléchissante 140 est typiquement à base d'une encre réfléchissante. Les propriétés de l'encre réfléchissante et l'épaisseur e₁₄₀ de la première couche réfléchissante 140 sont configurées pour que cette dernière présente un facteur de réflexion supérieur ou égal à 70% dans la gamme d'émission.

Le film décor 200 comprend typiquement une feuille décor 210 à base d'un matériau thermoformable, par exemple un polycarbonate. La feuille décor 210 et la feuille technique 110 sont avantageusement à base du même matériau thermoformable.

Le film décor 200 comprend en outre une couche obturatrice 230, typiquement à base d'une encre obturatrice. Les propriétés de l'encre obturatrice et l'épaisseur e₂₃₀ de la couche obturatrice 230 sont configurées de sorte à ce que cette dernière présente une absorbance de préférence supérieure ou égale à 95% dans la gamme d'émission de la première source lumineuse 150. La couche obturatrice 230 présente au moins une ouverture 235 dont la forme constitue un pictogramme destiné à être rétro-éclairé par la ou les première(s) source(s) lumineuse(s) 150. La figure 1B illustre l'exemple d'une ouverture 235 présentant la forme d'une pompe à essence, pictogramme courant dans l'industrie automobile. Il est entendu que cette forme est donnée à titre d'exemple et que toutes les formes sont envisageables, y compris des formes obtenues grâce à plusieurs ouvertures 235 distinctes. La couche obturatrice 230 a un double rôle : elle joue le rôle d'obturateur de la lumière émise par les sources lumineuses 150 et permet également de faire apparaitre un décor visible par l'utilisateur au travers de la feuille décor 210, typiquement transparent. Ainsi, l'aspect de sa face externe 231 est important pour l'esthétique du système.

Pour cette raison, la couche obturatrice 230 peut comprendre une couche décor s'étendant à partir de la face externe 231 de la couche obturatrice 230. La couche décor est de la ou les couleurs souhaitée(s) pour le rendu esthétique du système vu par l'utilisateur. Le niveau d'absorbance de la couche obturatrice présente alors deux composantes : une venant de la couche décor, et une venant du reste de la couche obturatrice 230.

Dans le cas classique d'un décor de couleur noir, la couche obturatrice 230 ne comprend typiquement pas de couche décor. Le film décor 200 peut comprendre en outre une couche semi-transparente 220 dont la présence permet d'empêcher que le pictogramme 1000 soit visible par l'utilisateur lorsqu'il n'est pas éclairé. De préférence, la couche semi-transparente 220 s'étend au-delà d'une zone sous-jacente aux ouvertures 235. Elle peut être déposé sur toute la face interne 232 de la couche obturatrice 230. Cela permet de faciliter la fabrication du système 1. La couche semi-transparente 220 peut également s'étendre uniquement au voisinage des ouvertures 235 afin de limiter la quantité d'encre nécessaire à sa réalisation.

Selon un exemple avantageux, la couche semi-transparente 220 est en contact direct de la couche obturatrice 230. Avantageusement, la couche obturatrice 230 se trouve entre la couche semi-transparente 220 et le film décor 210. Selon un autre exemple envisageable, la couche semi-transparente 220 peut se trouver entre la couche décor de la couche obturatrice 230 et le reste de la couche obturatrice 230.

Le film décor 200 comprend avantageusement un deuxième film réfléchissant 240 recouvrant une partie de la face interne 232 de la couche obturatrice 230, sans cependant recouvrir la ou les premières ouvertures 235.

La figure 1B représente le film décor 200 vu de dessous, depuis l'intérieur du système 1. Cette figure illustre la façon dont l'ouverture 235 dans la couche obturatrice 230 met à jour une portion du reste du film décor 200, par exemple ici une portion de la face interne 222 de la couche semi-transparente 220. Elle illustre également un exemple de disposition dans le plan transversal de la deuxième couche réfléchissante 240 autour du pictogramme. On observe que, de façon avantageuse, le contour de la deuxième couche réfléchissante 240, repéré dans le plan transversal par son flanc externe 243, présente une forme très similaire à celle pictogramme. Il est à noter que, comme représenté en figure 1B, le contour de la deuxième couche réfléchissante 240 peut être simplifié par rapport à la forme du pictogramme.

Grâce à la présence de la première couche réfléchissante 140 et de la deuxième couche réfléchissante 240 en vis-à-vis l'un de l'autre, une partie au moins du faisceau lumineux émis par la première source lumineuse 150 réalise au moins un aller-retour dans l'épaisseur de la couche de remplissage 300 avant de sortir du système 1 au travers des ouvertures 235. Dit autrement, certains rayons du faisceau lumineux émis sont réfléchis par la première couche réfléchissante 140 et par la deuxième couche réfléchissante 240 avant de sortir par les ouvertures 235. Certains d'entre eux sont réfléchis plusieurs fois par chacune des couches réfléchissantes 140, 240 avant de passer par les ouvertures 235.

Les rayons effectuant un ou plusieurs aller-retours dans la couche de remplissage 300 avant de passer par les ouvertures peuvent être qualifiés de rayons indirects. Ils participent à luminance du pictogramme conjointement avec les rayons, dits directs, n'étant pas réfléchis par les couches réfléchissantes 140, 240 entre leur émission par la première source lumineuse 150 et leur sortie du système 1 par les ouvertures 235. La luminance du pictogramme présente donc une composante directe, assurée par les rayons directs, et une composante indirecte, assurée par les rayons indirects.

Les rayons indirects permettent de rétro-éclairer le pictogramme selon un profil de luminance plus avantageux que si seuls des rayons directs passaient les ouvertures 235, cas dans lequel le profil de luminance du pictogramme correspondrait au passage des rayons directs dans les ouvertures selon le profil d'émission de la source lumineuse. Les rayons indirects permettent notamment une redistribution de la luminance au sein du pictogramme. Les rayons indirects peuvent notamment compenser un faible niveau en certaines zones du pictogramme de la composante directe de la luminance. Grâce à cela, l'homogénéité d'éclairage du pictogramme est améliorée. Le rendement optique global du pictogramme est lui aussi amélioré, puisqu'une plus grande proportion du faisceau lumineux émis par la première source lumineuse 150 participe au rétro-éclairage du pictogramme.

Par ailleurs, à intensité d'émission égale au niveau de la première source lumineuse 150, un rayon indirect participe généralement moins à la luminance du pictogramme qu'un rayon direct. Cela est dû au fait que les couches réfléchissantes 140, 240 n'offrent pas nécessairement une réflexion totale. Cela peut être utilisé au profit d'une optimisation de l'homogénéité d'éclairage du pictogramme. Il peut en effet être avantageux de pouvoir jouer à la fois sur la direction des différents lumineux et sur leur niveau d'intensité pour assurer une meilleure homogénéité d'éclairage.

Pour caractériser le positionnement d'une première source lumineuse 150 par rapport au pictogramme 1000, on définit une distance de rétro-éclairage d₁₅₀ mesurée dans le plan transversal entre les ouvertures 235 et la première source lumineuse 150. Plus exactement, on définit cette distance entre un flanc externe des ouvertures 235 formant le pictogramme 1000 et un flanc interne 153 de la première source lumineuse 150. Le flanc interne 153 de la première source lumineuse 150 correspond à son flanc se trouvant en regard de la première couche réfléchissante 140. Préférentiellement, la distance de rétro-éclairage d₁₅₀ est inférieure à 5 mm. Cela permet de minimiser l'éclairage direct du pictogramme 1000, notamment lorsque l'émission du faisceau lumineux par la première source lumineuse 150 se fait en moyenne sensiblement parallèlement au plan transversal. Minimiser l'éclairage direct permet notamment d'éviter l'apparition de points chauds. Cela permet également de maximiser la luminance sans pour autant affecter l'homogénéité d'éclairage du pictogramme.

De façon générale, les premières sources lumineuses 150 sont positionnées de façon à ce que la proportion la plus faible possible du faisceau émis sorte directement du système par les ouvertures 235, sans réflexion préalable. Ainsi, ce positionnement peut être adapté en fonction du profil d'émission des premières sources lumineuses 150 et de la forme des pictogrammes.

Avantageusement, les premières sources lumineuses 150, les couches réfléchissantes 140, 240 et les ouvertures 235 sont positionnées les unes relativement aux autres de sorte à ce que le rapport entre le flux lumineux sortant du système au travers des ouvertures 235 formant le pictogramme 1000 après avoir subi au moins une réflexion sur au moins une des couches réfléchissantes 140, 240, et le flux lumineux émis par les sources lumineuses 150 rétro-éclairant le pictogramme 1000 soit supérieur ou égal à 75%, de préférence supérieur ou égal à 90%, idéalement égal à 100%. Ce rapport est noté Rindirect. Fixer Rindirect supérieur ou égal à 75% permet de limiter l'éclairage direct et donc d'obtenir les avantages mentionnés précédemment.

Rindirect peut notamment être déterminé en fonction du profil d'émission des premières sources lumineuses 150. Les premières sources lumineuses 150 émettent en effet sur un certain secteur angulaire pouvant présenter une fenêtre impactant directement les ouvertures 235. Le rapport Rindirect est fonction de cette fenêtre et de la puissance émise dans les directions d'émission comprises dans cette fenêtre. Si le secteur angulaire d'émission d'une première source lumineuse 150 ne comprend aucune fenêtre impactant directement les ouvertures 235, alors Rindirect est égal à 100%.

Il est possible d'utiliser des simulations optiques de lancer de rayons - technique couramment désignée par le terme anglais de « ray tracing » - afin d'optimiser le placement des différents éléments (premières sources lumineuses 150, couches réfléchissantes 140, 240) autour des ouvertures 235 pour maximiser le rapport Rindirect.

Pour caractériser le positionnement et les dimensions des couches réfléchissantes 140, 240, on définit notamment :
- Une dimension caractéristique D_{picto} du pictogramme, définie selon toute direction du plan transversal.
- Une dimension caractéristique D₁₄₀ de la première couche réfléchissante 140, définie selon toute direction du plan transversal.
- Une dimension caractéristique D₂₄₀ de la deuxième couche réfléchissant 240, définie selon toute direction du plan transversal.
- Le dépassement latéral dépₗₐₜ entre la première couche réfléchissante 140 et la deuxième couche réfléchissante 240, défini selon toute direction du plan transversal.
- Le débordement latéral débₗₐₜ de la deuxième couche réfléchissant 140 par rapport au pictogramme, défini selon toute direction du plan transversal.

Le dépassement latéral dépₗₐₜ peut notamment être mesuré :
- Si la première couche réfléchissante 140 s'étend au-delà de la deuxième couche réfléchissante 240 : en un point du contour de la deuxième couche réfléchissante 240, selon la direction du plan transversal normale à la tangente au contour en ce point. Le contour de la deuxième couche réfléchissante 240 correspond à la projection de son flanc externe 243 dans le plan transversal.
- Si la deuxième couche réfléchissante 240 s'étend au-delà de la première couche réfléchissant 140 : en un point du contour de la première couche réfléchissante 140, selon la direction du plan transversal normale à la tangente au contour en ce point. Le contour de la première couche réfléchissante 140 correspond à la projection de son flanc externe 143 dans le plan transversal.

Avantageusement, la première couche réfléchissante 140 et la deuxième couche réfléchissante 240 s'étendent l'un au-delà de l'autre dans le plan transversal sur un dépassement latéral dépₗₐₜ compris entre 0 et 10 mm, de préférence compris entre 0 et 5 mm. Cela permet notamment d'éviter que la lumière ne se propage trop latéralement, sans contribuer à l'éclairage du pictogramme voisin. Cela limite ainsi la pollution lumineuse induite par le premier pictogramme sur d'éventuels pictogrammes voisins. Cette caractéristique est particulièrement avantageuse dans les directions du plan transversal dans lesquelles ne se trouve pas de source lumineuse 150.

Si les couches réfléchissantes 140, 240 sont centrés l'un par rapport à l'autre, les dimensions caractéristiques D₁₄₀ et D₂₄₀ sont ainsi avantageusement sensiblement égales. Le débordement latéral débₗₐₜ peut notamment être mesuré, en un point du contour du pictogramme, selon la direction du plan transversal normale à la tangente au contour en ce point. Dans ce cas de figure, comme illustré à la figure 1B, le débordement latéral débₗₐₜ reste sensiblement constant quel que soit le point du contour du pictogramme où il est mesuré.

Le débordement latéral débₗₐₜ est avantageusement supérieur à 1 mm, de préférence supérieur à 2 mm. Il est avantageusement inférieur à 5 mm, de préférence inférieur à 4 mm. Selon un exemple avantageux, il est sensiblement égal à 3 mm. Le débordement latéral débₗₐₜ est avantageusement choisi en prenant en compte l'épaisseur e₃₀₀ de la couche de remplissage 300, et inversement. Il a par exemple été montré que de bons résultats étaient obtenus pour débₗₐₜ=2mm et e₃₀₀=2mm.

Selon un exemple, le contour de la deuxième couche réfléchissante 240 peut présenter une former similaire à celle du pictogramme, et un agrandissement dimensionnel compris entre 110% et 120% par rapport aux dimensions du pictogramme. Selon cet exemple, on a ainsi 1,1*D₂₄₀≤D_{picto}≤1,2*D₂₄₀.

Par ailleurs, la deuxième couche réfléchissante 240 présente un flanc interne 243' et la couche obturatrice 230 présente un flanc interne 233 délimitant transversalement les ouvertures 235. Le flanc interne 243' de la deuxième couche réfléchissante 240 peut se trouver dans le prolongement selon la direction verticale du flanc interne 233 de la couche obturatrice 230. Il est également possible que le flanc interne 243' de la deuxième couche réfléchissante 240 se trouve en retrait par rapport au flanc interne 233 de la couche obturatrice 230, comme illustré sur la figure 1A.

On notera que lorsqu'une ouverture 235 forme un contour fermé dans la couche obturatrice 230, formant ainsi un îlot isolé 236 dans la couche obturatrice 230, cet îlot isolé 236 peut aussi bien être au moins partiellement recouvert de la deuxième couche réfléchissante 240 que ne pas être recouvert de la deuxième couche réfléchissante 240, comme illustré à la figure 1B. Ce choix se fera principalement en fonction des dimensions de l'îlot isolé 236 et éventuellement en fonction de la valeur de débordement latéral débₗₐₜ choisie. Il peut en effet être décidé de ne recouvrir l'îlot isolé 236 d'une portion de la deuxième couche réfléchissante 240 que si les dimensions de l'îlot permettent que ce dernier soit recouvert d'une portion de deuxième couche réfléchissante 240 présentant des dimensions caractéristiques sensiblement égales à débₗₐₜ.

Si le film technique 100 comprend plusieurs premières sources lumineuses 150, la première couche réfléchissante 140 s'étend de préférence entre ces premières sources lumineuses 150, comme illustré à la figure 1A. Quel que soit le nombre de premières sources lumineuses 150, la première couche réfléchissante 140 peut notamment être au contact de chacune des premières sources lumineuses 150, comme il est illustré à la figure 1A, ou encore s'étendre jusqu'en dessous des premières sources lumineuses 150. Cela permet de maximiser le nombre de rayons lumineux émis par la ou les premières sources lumineuses 150 pouvant être redressés par réflexion sur la première couche réfléchissante 140 en direction de la deuxième couche réfléchissant 240 ou de la ou des première(s) ouverture(s) 235. Idéalement, la première couche réfléchissante 140 et la ou les premières sources lumineuses 150 sont placées l'une relativement à l'autre de façon à ce que le faisceau lumineux émis par les premières sources lumineuses 150 soit intégralement réfléchi.

Le système 1 peut comprendre au moins une deuxième ouverture dont la forme dans la couche obturatrice 230 forme un deuxième pictogramme. Le deuxième pictogramme est rétro-éclairé par au moins une deuxième source lumineuse 150'. Une première couche réfléchissante secondaire 140' et une deuxième couche réfléchissante secondaire 240' sont prévus pour assurer l'éclairage indirect du deuxième pictogramme. Les caractéristiques des différents éléments décrits précédemment s'appliquent mutatis mutandis aux éléments entourant le deuxième pictogramme.

De préférence, la couche de remplissage 300, et de façon plus générale le système 1, présente une forme coudée entre les deux pictogrammes 1000, 2000.

Dans ce mode de réalisation, la couche de remplissage 300 présente au moins deux portions 300', 300" présentant des directions principales d'extension distinctes dans le plan de coupe. Ainsi, la première portion 300' de la couche de remplissage 300 et la deuxième portion 300" de la couche de remplissage 300 forment un angle α entre elles. α est avantageusement supérieur à 120 °.

Plus précisément, il peut être défini que le film décor 200 comprend :
- une première portion décor 200' au niveau de laquelle se trouve une première portion 232' de la face interne 232 de la couche obturatrice 230. La première portion décor 200' comprend l'au moins une première ouverture 235.
- une deuxième portion décor 200" au niveau de laquelle se trouve une deuxième portion 232" de la face interne 232 de la couche obturatrice 230.

La première portion 232' et la deuxième portion 232" de la face interne 232 de la couche obturatrice 230 forme un angle α₂, avec α₂ supérieur à 120°°.

De façon similaire, on définit :
- une première portion 102' de la face interne 102 du film technique 100, au niveau de laquelle s'étend la première couche réfléchissante 140 et en regard de la première portion 232' de la face interne 232.
- une deuxième portion 102" de la face interne 102 du film technique 100, en regard de la deuxième portion 232" de al face interne 232.

La première portion 102' et la deuxième portion 102" de la face interne 102 de la couche obturatrice 230 forme un angle α₁, avec α₁ supérieur à 120°.

De préférence, la première portion 232' et la deuxième portion 232" de la face interne 232 de la couche obturatrice 230 s'étendent respectivement parallèlement à la première portion 102' et à la deuxième portion 102" de la face interne 102 du film technique 100. Avantageusement, α₁ et α₂ sont sensiblement égaux.

Par ailleurs, il est envisageable de prévoir une couche obturatrice secondaire au niveau du film technique 100, par exemple s'étendant depuis sa face interne 102, dans les zones du film technique 100 où la première couche réfléchissante 140 ne s'étend pas. Cela permet de limiter la propagation de la lumière inutile et donc de réduire encore la pollution lumineuse induite par l'éclairage du pictogramme 1000 sur les pictogrammes voisins.

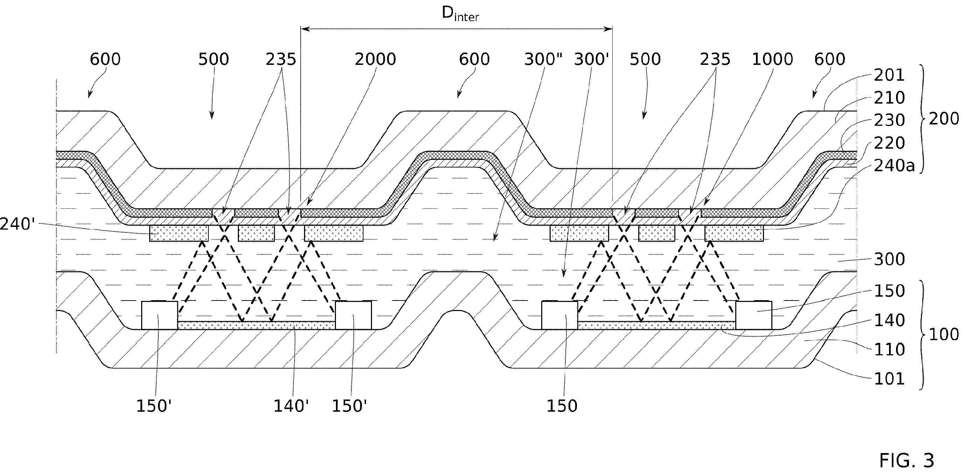

Un pictogramme peut être séparé de ses pictogrammes voisins par plusieurs coudes formés par le système 1, comme cela est par exemple représenté en figure 3. Dans cet exemple avantageux, chaque pictogramme (i.e. ouverture(s)), sa source lumineuse associée et ses couches réfléchissantes associées se trouvent dans le plan de coupe entre deux coudes tels que décrits précédemment. Les rayons lumineux arrivant sur le coude se retrouvent pour la plupart, voire tous, bloqués par ce changement de géométrie. Cela permet de limiter la pollution lumineuse entre les pictogrammes.

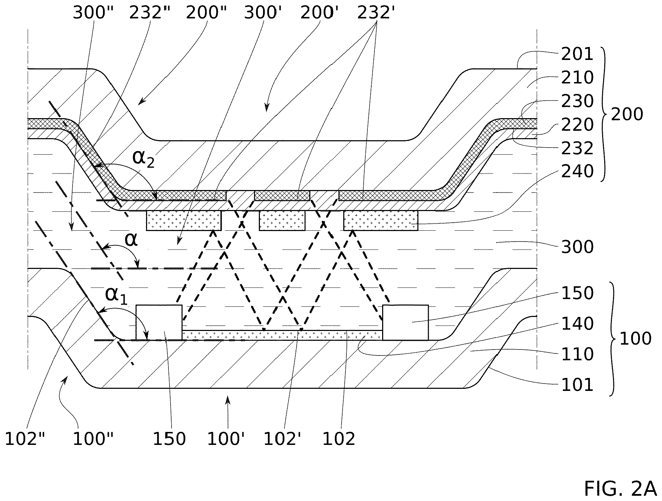

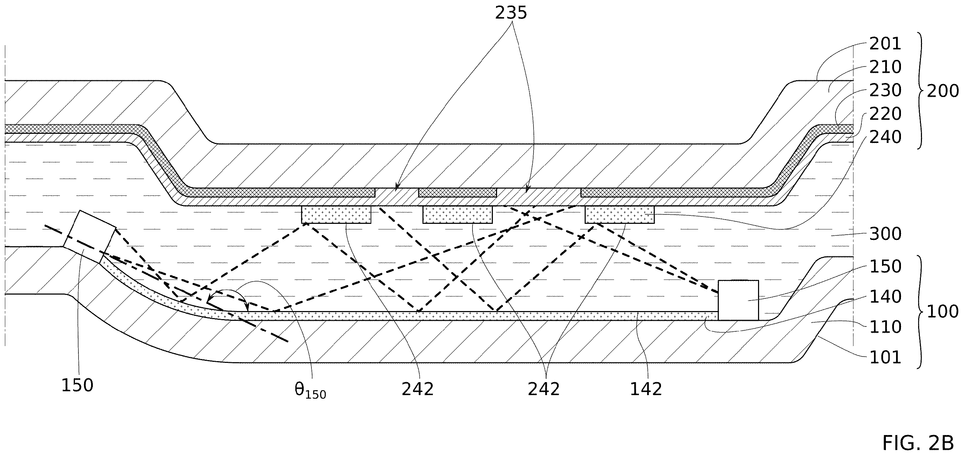

La succession de coudes formée par le système 1 peut s'accompagner d'une alternance de renfoncements 500 et d'avancées 600 au niveau de la face externe 201 du film décor 200. Ces renfoncements 500 et avancées 600 peuvent jouer le rôle de détrompeurs tactiles lors de l'utilisation du système 1 par un utilisateur, notamment dans le cas de pictogrammes ayant une fonction interactive (boutons activables, par exemple par commande capacitive). La présence de coudes tels que décrits précédemment peut également permettre de faire varier l'orientation angulaire d'une ou plusieurs sources lumineuses 150, comme illustré à la figure 2B. Il est en effet possible de placer une première source lumineuse 150 dans un coude jouxtant le premier pictogramme qu'il rétro-éclaire. La direction principale d'émission de la source lumineuse 150 présente alors un décalage angulaire θ₁₅₀ non nul avec le plan transversal, i.e. avec les faces internes 142, 242 des couches réfléchissantes 140, 240. Une telle configuration permet notamment de favoriser la proportion de rayons indirects parmi les rayons quittant le système 1 par les ouvertures 235. L'homogénéité d'éclairage du pictogramme peut donc être améliorée par ce biais. Le nombre et l'intensité des points chauds peuvent notamment être limités. Cela peut également permettre de jouer sur l'angle d'incidence des rayons traversant les ouvertures 235 et donc sur l'homogénéité d'éclairage du pictogramme.

Il est à noter qu'un décalage angulaire entre une source lumineuse 150 et le plan transversal peut être obtenu sans placer la source lumineuse 150 dans un coude. Les mêmes bénéfices seront obtenus.

Concernant la nature des sources lumineuses dont il est question dans la présente invention, il est possible d'utiliser des LED RGB (de l'anglais « Red, Green, Blue », en français « rouge, vert, bleu ») pour contrôler la couleur d'éclairage du ou des pictogrammes du système.

Par ailleurs, il est possible de prévoir que les sources lumineuses rétro-éclairant des pictogrammes voisins ou un même pictogramme soient alimentées indépendamment. Cela peut permettre de réaliser un dégradé de couleur sur une série de pictogrammes voisins ou au sein d'un même pictogramme et/ou de réaliser un effet dynamique d'éclairage, par exemple un clignotement ou un effet de mouvement.

L'alimentation distincte de plusieurs sources lumineuses rétro-éclairant un même pictogramme peut également permettre de jouer sur différents niveaux d'intensité lumineuse provenant de sources lumineuses différentes, et ainsi d'optimiser l'homogénéité d'éclairage du pictogramme.

L'invention n'est pas limitée aux modes de réalisations précédemment décrits et s'étend à tous les modes de réalisation couverts par l'invention.

## Revendications

1. Système de rétroéclairage (1) d'un pictogramme lumineux comprenant :
• Un film dit film technique (100) présentant une face interne (102) et comprenant au moins une première source lumineuse (150), la première source lumineuse (150) étant configurée pour émettre un premier faisceau lumineux dans une gamme de longueurs d'onde dite gamme d'émission,
• Un film dit film décor (200) présentant une face interne (202) en regard de la face interne (102) du film technique, le film décor (200) comprenant une couche obturatrice (230) présentant au moins une première ouverture (235), la couche obturatrice (230) présentant une absorbance supérieure ou égale à 95% dans la gamme d'émission, la forme de l'au moins une première ouverture (235) dans la couche obturatrice (230) constituant un premier pictogramme (1000), le premier pictogramme (1000) s'étendant principalement parallèlement à un plan dit plan transversal,
• Une couche de remplissage (300) à base d'un matériau de remplissage et s'étendant entre la face interne (102) du film technique (100) et la face interne (202) du film décor (200),
**caractérisé en ce que** le film technique (100) comprend en outre une première couche réfléchissante (140) et le film décor (200) comprend en outre une deuxième couche réfléchissante (240),
le deuxième film réfléchissant (240) recouvrant au moins une partie d'une surface interne (232) de la couche obturatrice (230) sans recouvrir l'au moins une première ouverture (235), la première couche réfléchissante (140) et la deuxième couche réfléchissante (240) présentant chacune un facteur de réflexion supérieur ou égal à 70%, de préférence supérieure ou égale à 80%, dans la gamme d'émission,
une partie au moins du premier faisceau lumineux étant configurée pour être réfléchie au moins une fois par la première couche réfléchissante (140) et au moins une fois par le deuxième film réfléchissant (240) avant de passer par l'au moins une première ouverture (235).

2. Système de rétroéclairage (1) selon la revendication précédente dans lequel le rapport entre le flux lumineux sortant du système (1) par l'au moins une première ouverture (235) après avoir été réfléchi au moins une fois par au moins l'un parmi la première couche réfléchissante (140) et la deuxième couche réfléchissante (240), et le flux lumineux total sortant du système (1) par l'au moins une première ouverture (235) est supérieur ou égal à 75%.

3. Système de rétroéclairage (1) selon l'une quelconque des revendications précédentes dans lequel la première couche réfléchissante (140) et la première source lumineuse (150) sont espacées dans le plan transversal d'une distance inférieure à 1 mm, de préférence sensiblement égale à 0 mm.

4. Système de rétroéclairage (1) selon l'une quelconque des revendications précédentes dans lequel, selon toute direction du plan transversal, l'une parmi la première couche réfléchissante (140) et la deuxième couche réfléchissante (240) s'étend au-delà de l'autre parmi la première couche réfléchissante (140) et la deuxième couche réfléchissante (240) sur une distance dite dépassement latéral compris entre 0 et 5 mm

5. Système de rétroéclairage (1) selon la revendication précédente dans lequel le dépassement latéral est sensiblement égal à 0.

6. Système de rétroéclairage (1) selon l'une quelconque des revendications précédentes dans lequel, selon toute direction du plan transversal, la deuxième couche réfléchissante (240) s'étend au-delà du premier pictogramme (1000) sur une distance dite débordement latéral supérieure à 1 mm.

7. Système de rétroéclairage (1) selon l'une quelconque des revendications précédentes dans lequel, selon toute direction du plan transversal, la deuxième couche réfléchissante (240) s'étend au-delà du premier pictogramme (1000) sur une distance dite débordement latéral inférieure à 5 mm.

8. Système de rétroéclairage (1) selon l'une quelconque des revendications précédentes dans lequel le film décor (200) comprend une couche semi-transparente (220) au moins sous-jacente à l'au moins une première ouverture (235), la couche semi-transparente (220) présentant une transmittance totale comprise entre 10% et 50%, de préférence sensiblement égale à 40% dans la gamme d'émission.

9. Système de rétroéclairage (1) selon l'une quelconque des revendications précédentes dans lequel la couche de remplissage (300) présente une épaisseur e₃₀₀ selon une direction dite direction verticale perpendiculaire au plan transversal sensiblement comprise entre 1 et 5 mm.

10. Système de rétroéclairage (1) selon l'une quelconque des revendications précédentes dans lequel la couche de remplissage (300) présente une première portion (300') remplissant l'au moins une première ouverture (235) et une deuxième portion (300"), la première portion (300') et la deuxième portion (300") formant un coude d'angle α, avec α supérieur à 120 °.

11. Système de rétroéclairage (1) selon la revendication précédente dans lequel l'au moins une première source lumineuse (150) est sous-jacente à la deuxième portion (300") de la couche de remplissage (300).

12. Système de rétroéclairage (1) selon l'une quelconque des revendications précédentes dans lequel le matériau de remplissage est choisi parmi un polycarbonate un polyéthylène téréphtalate (PET) et un polyméthacrylate de méthyle (PMMA).

13. Système de rétroéclairage (1) selon l'une quelconque des revendications précédentes, dans lequel :
• la couche obturatrice (230) présente au moins une deuxième ouverture (235'), la forme de l'au moins une deuxième ouverture (235') dans la couche obturatrice (230) constituant un deuxième pictogramme (2000),
• le film technique (100) comprend au moins une deuxième source lumineuse (150'), la deuxième source lumineuse (150') étant configurée pour émettre un deuxième faisceau lumineux dans une gamme de longueurs d'onde dite deuxième gamme d'émission,
• le film technique (100) comprend en outre une première couche réfléchissante secondaire (140') et le film décor (200) comprend en outre une deuxième couche réfléchissante secondaire (240'),
• la deuxième couche réfléchissante secondaire (240') recouvre au moins une partie de la surface interne (232) de la couche obturatrice (230) sans recouvrir l'au moins une deuxième ouverture (235'),
• une partie au moins du deuxième faisceau lumineux est configurée pour être réfléchie au moins une fois par la première couche réfléchissante secondaire (140') et au moins une fois par la deuxième couche réfléchissante secondaire (240') avant de passer par l'au moins une deuxième ouverture (235').

14. Système de rétroéclairage (1) selon la revendication précédente dans lequel, selon toute direction du plan transversal, l'au moins une première ouverture (235) et l'au moins une deuxième ouverture (235') sont espacées d'une distance dite écartement inter-pictogrammes Dᵢₙₜₑᵣ supérieure à 20 mm.

15. Système de rétroéclairage (1) selon l'une quelconque des deux revendications précédentes en combinaison avec la revendication 11 ou la revendication 12, dans lequel l'au moins une deuxième ouverture (235') est remplie par une troisième portion (300‴) de la couche de remplissage (300) séparée de la première portion (300') de la couche de remplissage (300) au moins par la deuxième portion (300") de la couche de remplissage (300).
